# EUROPÄISCHE PATENTANMELDUNG

(11) **EP 2 280 288 A1**
(43) Veröffentlichungstag der Anmeldung: **02.02.2011**
(21) Anmeldenummer: 10162383.3
(22) Anmeldetag: 10.05.2010
(51) Int. Cl.: G01S 7/40

(54) **Ausrichtung eines Radarsensors**

(30) Priorität: 08.07.2009 DE 102009027523
(71) Anmelder: Robert Bosch GmbH, 70442 Stuttgart (DE)
(72) Erfinder: Steffens, Wolf, 71083 Herrenberg (DE)

(57) **Zusammenfassung**

Zum Erfassen der Ausrichtung eines Radarsensors 20 mit Hilfe einer Reflektorvorrichtung 10 wird vom Radarsensor 20 ein Sendesignal abgestrahlt, das von der Reflektorvorrichtung 10 reflektiert wird, wobei anhand einer Signalstärke des reflektierten Sendesignals sowie einer Reflektorposition der Reflektorvorrichtung 10 die Ausrichtung des Radarsensors 20 ermittelt wird. Die Reflektorvorrichtung 10 weist mindestens zwei Reflektoren 11, 12 auf, die versetzt zueinander in einem gleichen Abstand vom Radarsensor 20 angeordnet werden, wobei ein Reflektor 11, 12 mit einer vorgegebenen Anregefrequenz senkrecht zum Radarsensor 20 schwingt.

## Beschreibung

Die Erfindung betrifft ein Verfahren zum Erfassen der Ausrichtung eines Radarsensors mit Hilfe einer Reflektorvorrichtung sowie eine Radarsensorerfassungseinrichtung.

### Stand der Technik

Zur Justage und/oder Kalibration von Radarsensoren, insbesondere solchen, die in Kraftfahrzeugen eingesetzt werden, wird eine Einrichtung und ein Verfahren benötigt, um den Radarsensor in Bezug auf eine vorgegebene Achse auszurichten. Ferner muss nach einem Reparaturfall oder einem Austausch des Radarsensors gewährleistet werden, dass der Radarsensor wieder korrekt ausgerichtet ist. Daher muss nach dem Einbau des Radarsensors die Ausrichtung des Radarsensors neu eingerichtet werden. Oft ist der Zugang zum Radarsensor nach dem Einbau nicht mehr möglich, so dass die Justage und/oder Kalibration nur mit einem hohen Zeitaufwand durchführbar sind. Üblicherweise verfügen Radarsensoren zwar über eine sehr gute Winkelbestimmung in Horizontalrichtung, so dass sich der Radarsensor bei einer bekannten Reflektorposition bezüglich dieser Richtung selbst vermessen kann. Eine Kalibration in Vertikalrichtung ist aber nur über die Vermessung der bekannten Leistungsverteilung des Radarsensors möglich. Dazu ist es aber notwendig, mehrere zeitaufwendige Reflektionsmessungen an verschiedenen Reflektorpositionen durchzuführen und auszuwerten.

In der US 6,636,172 B1 ist ein solches Verfahren zur Justage eines Radarsensors beschrieben, bei dem die Leistungsverteilung des Radarsensors an mindestens zwei bekannten Reflektorpositionen vermessen wird. Die Messung wird üblicherweise mit Hilfe eines Kippspiegelreflektors bei verschiedenen Kippwinkeln realisiert. Aufgrund der erforderlichen Verstellung des Kippspiegelreflektors ist die Messung aufwendig und fehleranfällig. Ferner können sich in der Nähe des Reflektors befindliche metallische Gegenstände die gemessene Leistungsverteilung des Radarsensors beeinflussen und zu einer fehlerhaften Einstellung des Radarsensors führen.

### Offenbarung der Erfindung

Aufgabe der Erfindung ist es, ein einfach durchführbares Verfahren sowie eine kostengünstige Vorrichtung zum Ausrichten des Radarsensor bereitzustellen.

Die Aufgabe der Erfindung wird durch ein Verfahren zum Erfassen der Ausrichtung eines Radarsensors mit Hilfe einer Reflektorvorrichtung nach Anspruch 1 sowie einer Radarsensorerfassungseinrichtung nach Anspruch 6 gelöst. Weitere vorteilhafte Ausführungsformen der Erfindung sind in den abhängigen Ansprüchen angegeben.

Erfindungsgemäß strahlt der Radarsensor ein Sendesignal ab, das von einer Reflektorvorrichtung reflektiert wird. Die Reflektorvorrichtung weist mindestens zwei Reflektoren auf, die versetzt zueinander in einem gleichen Abstand vom Radarsensor angeordnet werden. Dabei schwingt ein Reflektor mit einer vorgegebenen Anregefrequenz senkrecht zum Radarsensor. Durch Erfassung und Auswertung der reflektierten Signalstärke wird dann die Ausrichtung des Radarsensors bestimmt.

Ein Vorteil der erfindungsgemäßen Vorgehensweise zum Erfassen der Ausrichtung eines Radarsensors mit Hilfe einer Reflektorvorrichtung ist, dass das Verfahren einfach und sicher durchführbar und die Radarsensorerfassungseinrichtung kostengünstig herstellbar ist. Ferner bleibt die Reflektorposition aufgrund der beiden Reflektoren während der gesamten Messung erhalten. Dadurch müssen nicht mehrere Messungen hintereinander ausgeführt werden, bei denen die Reflektorposition umständlich verändert werden muss. Zudem weist das Verfahren eine sehr geringe Störanfälligkeit auf. Erfindungsgemäß wird die Frequenz der reflektieren Sendesignale durch das Schwingen eines Reflektors so verschoben, dass sie sich in einem Bereich befinden, in dem keine Störsignale durch andere Reflexe empfangen werden. Damit ist eine störungsfreie Messung der Signalstärke des reflektierten Sendesignals möglich.

In einer Ausführungsform der Erfindung werden die beiden Reflektoren mit unterschiedlichen Anregefrequenzen senkrecht zum Radarsensor zum Schwingen angeregt. Durch die Schwingungsanregung der beiden Reflektoren kann eine störungsunempfindliche Messung gewährleistet werden, weil die Frequenzen der durch die Reflektoren reflektierten Sendesignale zuverlässig von den Frequenzen der Signale von Störreflexen getrennt werden. Vorzugsweise liegt die Frequenz des Sendesignals des Radarsensors im Ultrakurzwellen-Bereich, wobei die Anregefrequenzen der Reflektoren höher ist als die Frequenz des Sendesignals.

In einer weiteren Ausführungsform der Erfindung wird die Ausrichtung des Radarsensor in Bezug auf eine vorgegebene Achse erfasst und eine Achsenabweichung bestimmt. Anschließend wird eine Justage bzw. eine Kalibration in Bezug auf die Achsenabweichung durchgeführt. Mit dieser Vorgehensweise ist eine schnelle und effektive Justage bzw. Kalibration möglich.

Die Erfindung wird im Folgenden anhand von Ausführungsbeispielen unter Bezugnahme auf die beigefügten Zeichnungen näher erläutert. In den Zeichnungen zeigen:
- Fig. 1: eine schematische Darstellung einer Radarsensorerfassungseinrichtung zum Erfassen der Ausrichtung eines Radarsensors;
- Fig. 2: eine Darstellung eines Frequenzspektrums der von einem Radarsensor aufgenommenen Signale bei einer Messung mit der erfindungsgemäßen Radarsensorerfassungseinrichtung; und
- Fig. 3: ein Darstellung des Strahlprofils des Radarsensors bei der Messung nach Fig. 2.

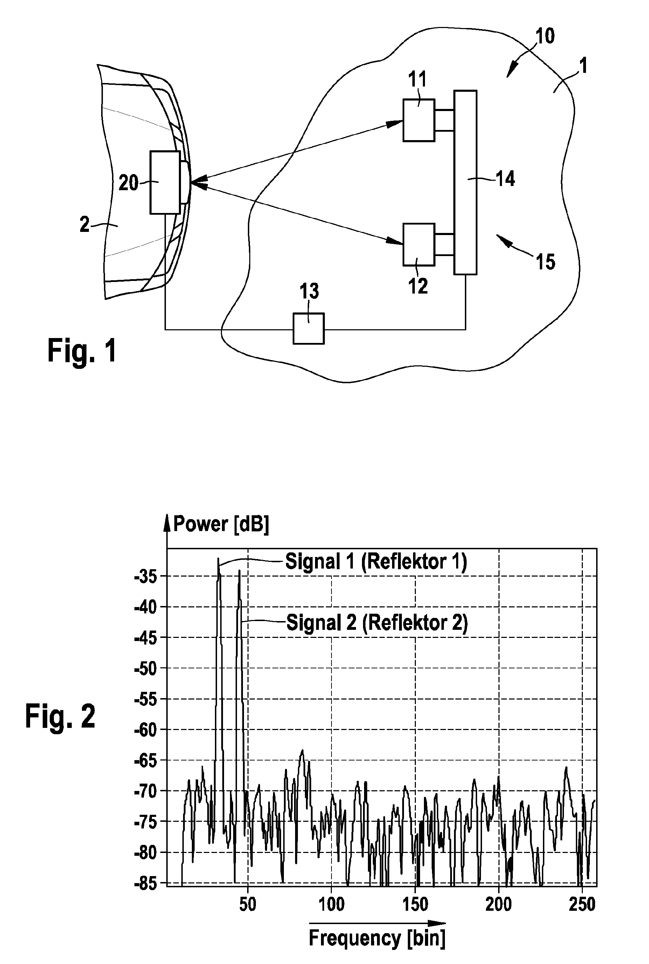

In Figur 1 wird die Erfindung am Beispiel eines Radarsensors 20 dargestellt, der als ein frequenzmodulierter Dauerstrich-Radarsensor 20 (FMCW) ausgebildet ist und eine Frequenz im Ultrakurzwellen-Bereich aufweist. Alternativ kann der Radarsensor 20 auch als ein Pulsradarsensor ausgebildet sein, der eine Messung auf Grundlage eines Impulsverfahren durchführt. Vorzugsweise ist der Radarsensor 20 in einer Stoßstange eines Kraftfahrzeugs 2 angeordnet. Jedoch kann der Radarsensor 20 auch an einem anderen Bereich des Kraftfahrzeugs 2 angeordnet sein. Der Radarsensor 20 kann als ein Abstandssensor zur Kollisionsvermeidung oder im Rahmen einer adaptiven Fahrgeschwindigkeitsregelung verwendet werden. Alternativ kann der Radarsensor 20 auch für andere Zwecke und im nicht Kraftfahrzeugbereich eingesetzt werden.

Zum Ausrichten des Radarsensors 20 am Kraftfahrzeug 2 ist eine Radarsensorerfassungseinrichtung 1 vorgesehen, die eine Reflektorvorrichtung 10 aufweist. Die Reflektorvorrichtung 10 umfasst zwei Reflektoren 11, 12, die versetzt zueinander in einem gleichen Abstand vom Radarsensor 20 angeordnet und parallel zum Radarsensor 20 am Kraftfahrzeug 2 ausgerichtet sind. Vorzugsweise sind die beiden Reflektoren 11, 12 als Cornerreflektor, als Tripelreflektor oder als ein Planspiegel ausgebildet und können elektromagnetischen Signale hoher Frequenzen reflektieren. Ferner besitzen die Reflektoren 11, 12 die Eigenschaft, auftreffende Signale in jeweils die Richtung zu reflektieren, aus der sie gekommen sind. Des Weiteren sind die beiden Reflektoren 11, 12 von einem Material umgeben, welches auftretende Signale absorbiert. Auf diese Weise wird gewährleistet, dass eine Überstrahlung der Reflektoreinrichtungen 11, 12 nicht zu störenden und damit unerwünschten Reflektionen an Gegenständen in der Umgebung führen.

Die Reflektorvorrichtung 10 umfasst ferner eine Schwingungserzeugungseinrichtung 14, die mit den beiden Reflektoren 11, 12 verbunden und als Ultraschall-Aktuator ausgebildet ist. Mit der Schwingungserzeugungseinrichtung 14 wird ein Reflektor 11, 12 mit einer vorgegebenen Anregefrequenz senkrecht zum Radarsensor 20 zum Schwingen angeregt. Da ein Reflektor 11, 12 auf Grundlage der vorgegebenen Anregefrequenz in Schwingung versetzt wird, können die beiden Reflektoren 11, 12 durch die unterschiedliche Reflektionsfrequenz vom Radarsensor 20 voneinander unterschieden und gleichzeitig vermessen werden. Wenn der eine Reflektor 11, 12 nicht zum Schwingen angeregt werden würde, würden sich die von den beiden Reflektoren 11, 12 reflektierten elektromagnetischen Signale überlagern, sodass der Radarsensor 20 nur einen einzigen Reflektor wahrnehmen würde. Ferner kann aufgrund der vorgegebenen Anregefrequenz eine störungsunempfindliche Messung gewährleistet werde, da keine Überlagerung durch Störsignale von anderen Reflexen, wie z. B. von Gegenstände im Raum, auftritt. Alternativ besteht auch die Möglichkeit beide Reflektoren 11, 12 zum Schwingen anzuregen, wobei unterschiedliche Anregefrequenzen verwendet werden. Hierdurch wird eine verbesserte Störsignalabtrennung erreicht. Es ist dabei bevorzugt, dass die Radarsensor-Sendefrequenz im Ultrakurzwellen-Bereich liegt und die Anregefrequenzen der beiden Reflektoren 11, 12 höher als die Radarsensor-Sendefrequenz ist.

Die beiden Reflektoren 11, 12 und die Schwingungserzeugungseinrichtung 14 der Reflektorvorrichtung 10 sind auf einem Gestell 15 in einer gemeinsamen Ebene angeordnet. Dabei können die beiden Reflektoren 11, 12 und die Schwingungserzeugungseinrichtung 14 vertikal oder horizontal in Bezug auf den Radarsensor 20 ausgerichtet sein. Dadurch kann der Radarsensor 20 sowohl in der vertikalen als auch in der horizontalen Richtung vermessen werden. Vorzugsweise kann die Reflektorvorrichtung 10 von der vertikalen Ausrichtung in die horizontale Ausrichtung auf dem Gestell 15 und zurück gedreht werden. Die Reflektorvorrichtung 10 wird parallel zum Kraftfahrzeug 2 positioniert, wobei das Kraftfahrzeug 2 rechtwinklig zu einer optischen Mittelachse der Reflektorvorrichtung 10 ausgerichtet ist. Alternativ kann die Reflektorvorrichtung 10 auf der Grundlage von Bezugspunkten auf dem Kraftfahrzeugs 2, wie z. B. die Kanten der Stoßstange oder der Trennfuge der Motorhaube, positioniert werden. Die Anordnung der beiden Reflektoren 11, 12 auf der Reflektorvorrichtung 10, in Bezug auf das Kraftfahrzeug 2, bleibt während der gesamten Messung fest. Dadurch müssen nicht mehrere Messungen hintereinander ausgeführt werden, bei denen die Reflektorposition umständlich geändert werden muss.

Neben der Reflektorvorrichtung 10 umfasst die Radarsensorerfassungseinrichtung 1 eine Auswerteeinrichtung 13. Die Auswerteeinrichtung 13 verbindet die Reflektorvorrichtung 10 der Radarsensorerfassungseinrichtung 1 mit dem Radarsensor 20 des Kraftfahrzeugs 2 über ein Bussystem und/oder eine drahtlose Verbindung. Die Auswerteeinrichtung 13 ist zum Ermitteln der Signalstärke der an der Reflektorvorrichtung 10 reflektierten Sendesignale des Radarsensors 20 ausgelegt. Die Auswerteeinrichtung 13 verarbeitet dabei die von dem Radarsensor 20 empfangene Sendesignale, die von den beiden Reflektoren 11, 12 reflektiert werden. Aus den Messwerten kann die Ausrichtung des Radarsensors 20 in Bezug auf eine vorgegebenen Achse ermittelt und eine Achsenabweichung bestimmt werden.

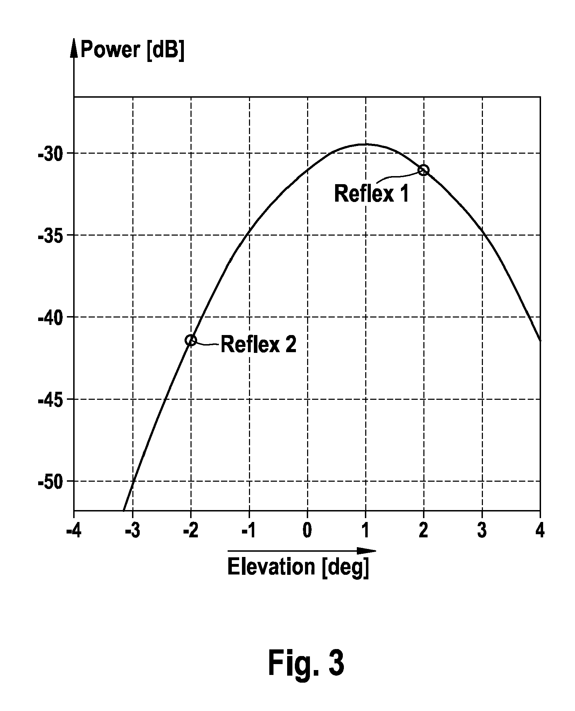

Die Bestimmung einer Achsenabweichung wird im Folgenden am Beispiel eines Strahlprofils eines Radarsensors 20, wie in Figur 3 gezeigt, des gemessenen Frequenzspektrums, wie in Figur 2 gezeigt, erläutert. Figur 3 zeigt dabei das Strahlprofil des Radarsensors 20 in Bezug auf die vertikal ausgerichtete Reflektoren 11, 12. Auf der x-Achse ist der Höhenwinkel und auf der y-Achse die Strahlleistung aufgetragen. Die beiden Reflektoren 11, 12 sind dabei gleich beabstandet vom Radarsensor 20 und auf den Nullpunkt des Höhenwinkel ausgerichtet. Figur 3 zeigt, dass der Radarsensor 20 in der vertikalen Ausrichtung achsenverschoben ist, so dass auf den Reflektor 11 treffende Strahlleistung höhere ist als die Strahlleistung auf den anderen Reflektor 12. In Figur 2 ist ferner das Frequenzspektrum der vom Radarsensor 20 aufgenommenen Signale, die an den Reflektoren 11 und 12 reflektiert wurden, dargestellt. Auf der x-Achse ist die Frequenz und auf der y-Achse die Leistung aufgetragen. Durch die Schwingungsanregung des einen der beiden Reflektoren 11, 12 ist die Frequenz der vom Radarsensor 20 empfangenen Signal des einen Reflektors 11 in Bezug auf den anderen Reflektor 12 verschoben, wie Figur 2 zeigt, so dass sich die Signale voneinander unterscheiden lassen. Aus der unterschiedlichen Signalstärke lässt sich dann die Achsenverschiebung des Radarsensors 20 in Bezug auf die Reflektorvorrichtung 10 ermitteln.

Anschließende wird dann eine Justage und/oder Kalibration in Bezug auf die ermittelte Achsenabweichung durchgeführt. Bei der Justage wird der Radarsensor 20 so eingestellt oder abgeglichen, dass die Achsenabweichung möglichst klein wird oder dass die Beträge der Achsenabweichung die Fehlergrenzen nicht überschreiten. Kleine Achsenabweichungen können vom Radarsensor 20 durch selbstständiges Nachstellen korrigiert werden. Bei einer hohen Achsenabweichung wird die Korrektur des Radarsensors 20 von einem Mechaniker über ein externes Steuergerät durchgeführt. Alternativ zu einer Justage kann auch eine Kalibration des Radarsensors 20 durchgeführt werden. Bei der Kalibration werden die vom Radarsensor 20 empfangenen Signale mit dem Wert der ermittelten Achsenabweichung korrigiert.

Durch das Vorsehen zweier versetzt zueinander angeordneten Reflektoren 11, 12 , die sich im gleichen Abstand zum Radarsensor 20 befinden, wobei einer der Reflektoren 11, 12 zur Schwingung angeregt wird, kann die Reflektorposition während der gesamten Messung unverändert beibehalten werden. Dadurch müssen nicht mehrere Messungen hintereinander ausgeführt werden, bei denen die Reflektorposition umständlich geändert werden muss. Wenn beide Reflektoren 11, 12 mit der vorgegebenen unterschiedlichen Anregefrequenzen senkrecht zum Radarsensor 20 zum Schwingen angeregt werden, weist das Verfahren eine besonders geringe Störanfälligkeit auf, da keine Überlagerung durch Störsignale von anderen Reflexen, wie z. B. von Gegenständen im Raum, auftritt. Ferner ist das Verfahren einfach und sicher durchführbar und die Radarsensorerfassungseinrichtung 1 kostengünstig herstellbar.

## Patentansprüche

1. Verfahren zum Erfassen der Ausrichtung eines Radarsensors (20) mithilfe einer Reflektorvorrichtung (10), wobei der Radarsensor (20) ein Sendesignal abstrahlt, das von der Reflektorvorrichtung (10) reflektiert wird und wobei anhand einer Signalstärke des reflektierten Sendesignals sowie einer Reflektorposition der Reflektorvorrichtung (10) die Ausrichtung des Radarsensors (20) ermittelt wird, **dadurch gekennzeichnet, dass** die Reflektorvorrichtung (10) mindestens zwei Reflektoren (11, 12) aufweist, die versetzt zueinander in einem gleichen Abstand vom Radarsensor (20) angeordnet werden, wobei ein Reflektor (11, 12) mit einer vorgegebenen Anregefrequenz senkrecht zum Radarsensor (20) schwingt.

2. Verfahren nach Anspruch 1, **dadurch gekennzeichnet, dass** beide Reflektoren (11, 12) mit unterschiedlichen Anregefrequenzen senkrecht zum Radarsensor (20) zum Schwingen angeregt werden.

3. Verfahren nach Anspruch 1 oder 2, **dadurch gekennzeichnet, dass** die Frequenz des Sendesignals des Radarsensors (20) im Ultrakurzwellen-Bereich liegt, wobei die Anregefrequenz des Reflektors (11, 12) höher ist als die Frequenz des Sendesignals.

4. Verfahren nach einem der Ansprüche 1 bis 3, **dadurch gekennzeichnet, dass** die Ausrichtung des Radarsensors (20) in Bezug auf eine vorgegebene Achse erfasst und eine Achsenabweichung bestimmt wird, wobei eine Justage in Bezug auf die Achsenabweichung durchgeführt wird.

5. Verfahren nach einem der Ansprüche 1 bis 4, **dadurch gekennzeichnet, dass** die Ausrichtung des Radarsensors (20) in Bezug auf die vorgegebenen Achse erfasst und die Achsenabweichung bestimmt wird, wobei eine Kalibration in Bezug auf die Achsenabweichung durchgeführt wird.

6. Radarsensorerfassungseinrichtung zum Erfassen der Ausrichtung eines Radarsensors (20) mithilfe einer Reflektorvorrichtung (10) und einer Auswerteeinrichtung (13), wobei der Radarsensor (20) ein Sendesignal abstrahlt, das von der Reflektorvorrichtung (10) reflektiert wird, wobei die Auswerteeinrichtung (13) zum Ermitteln einer Signalstärke des reflektierten Sendesignals in Bezug auf eine Reflektorposition der Reflektorvorrichtung (10) ausgelegt ist, **dadurch gekennzeichnet, dass** die Reflektorvorrichtung (10) mindestens zwei Reflektoren (11, 12) aufweist, die versetzt zueinander in einem gleichen Abstand vom Radarsensor (20) angeordnet sind, wobei eine Schwingungserzeugungseinrichtung (14) vorgesehen ist, die einen Reflektor (11, 12) mit einer vorgegebenen Anregefrequenz senkrecht zum Radarsensor (20) in Schwingung versetzt.

7. Radarsensorerfassungseinrichtung nach Anspruch 6, **dadurch gekennzeichnet, dass** die Frequenz des Sendesignals des Radarsensors (20) im Ultrakurzwellen-Bereich liegt, wobei die Anregefrequenz des Reflektors (11, 12) höher ist als die Frequenz des Sendesignals.

8. Radarsensorerfassungseinrichtung nach Anspruch 6 oder 7, **dadurch gekennzeichnet, dass** der Reflektor (11, 12) als ein Cornerreflektor, ein Tripelreflektor und/oder ein Planspiegel ausgebildet ist.
